# EUROPEAN PATENT SPECIFICATION

(11) **EP 2 995 664 B1**
(45) Date of publication and mention of the grant of the patent: **28.08.2019**
(21) Application number: 14382344.1
(22) Date of filing: 12.09.2014
(51) Int. Cl.: C09J 4/00, C09J 4/06, C08F 222/32

(54) **Fast and universal adhesive**
Alleskleber
Adhésif universel

(43) Date of publication of application: 16.03.2016
(73) Proprietor: Afinitica Technologies, S. L., 08193 Bellaterra (Cerdanyola del Vallès) (ES)
(72) Inventor: Mcardle, Ciaran, 08193 Cerdanyola del Vallès (ES); Gutiérrez Abad, Raquel, 08193 Cerdanyola del Vallès (ES); López, Juan Andrés, 08193 Cerdanyola del Vallès (ES)
(74) Representative: Gallego Jiménez, José Fernando

(56) References cited:
- WO-A1-01/12243
- WO-A1-2014/131650
- KR-A- 20120 131 802

## Description

### Technical Field

The present invention relates to a fast curing gel adhesive which can be used as instant adhesive and as universal adhesive, for both domestic and industrial applications.

### Technical Background

Cyanoacrylate is the generic name for a family of resistant fast acting adhesives based on esters of 2-cyanoacrylic acid. The structure of the monomer is as follows: 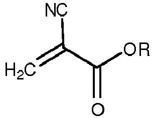 wherein R is usually an alkyl group such as, for example, methyl, ethyl, butyl, or octyl, or an alkoxyalkyl group, for example, 2-methoxymethyl or 2-ethoxyethyl.

Such compounds have been well known for some time, as described in, for example, S. Ebnesajjad Ed., Adhesives Technology Handbook, William Andrew, Norwich, 2008.

Other monomers which are also used as fast acting adhesives are methylidene malonates, as those described in the Korean patent applications KR-A-2012-0128004 and KR-A-2012-0131802.

In many industrial and domestic applications these compounds are used in form of one-component, as they polymerize rapidly when they are in the form of a thin film between two substrates in the presence of anions or nucleophilic species. The speed at which the bond is formed and the ease of use have contributed to their popularity.

Cyanoacrylate monomers are generally low viscosity liquids at room temperature, although solid monomers are also known as, for example, neopentyl cyanoacrylate.

Liquid compositions of these monomers have some drawbacks, as they are not suited for applying the adhesive on vertical or inclined surfaces, as they sag. They also show difficulties for bonding porous surfaces since the liquid adhesive is absorbed into them.

In the prior art it has been suggested to increase the viscosity of the adhesives to solve this problem, for example, by including organic polymers or inorganic fillers as thickeners, as described, for example, in the U.S. patents US3607542 and US4105715.

These compositions may or may not display thixotropy. Thixotropy means the property of certain non-Newtonian fluids and pseudo plastics to change their viscosity over time, so the more the fluid is subjected to shear stress, the lower becomes its viscosity.

In general, it is desirable to have a thixotropic gel adhesive that does not flow or sag on vertical or ceiling surfaces, but that easily flows at the moment of use by the shear effect.

A way of preparing thixotropic cyanoacrylate adhesives is by using fumed silica as described, for example, in the international patent application WO-A-85/00963. However, it is disclosed therein that its use is associated with stability problems of the adhesive. Because of this, hydrophobic fumed silica is preferably used, which is obtained by surface treatment with a hydrophobizing substance.

In the U.S. patents US4845151 and US5248708 some thixotropic cyanoacrylate compositions are described comprising untreated fumed silica, which are stable if a polyoxyalkylene glycol, a glycol ester or a glycol ether is included in the formulation.

Hydrophobic silica prevails in the formulation of thixotropic cyanoacrylates because it confers greater stability, however, the thixotropic agent must be carefully chosen so that the stability and the applicative properties of the adhesive do not become impaired. In the U.S. patent US4720513 it is disclosed that the use of an acidic catalysis in the surface treatment of silica can influence both the thixotropic effect and the stability of the formulation. Hydrophobic silica has a high specific surface and, consequently, it can also occasionally cause the adsorption of stabilizing agents which are included in the composition as, for example, BF₃.

Besides the viscosity modifying agent, in the thixotropic cyanoacrylate adhesives the monomer itself has influence on the stability of the composition.

Thus, for example, thixotropic ethyl cyanoacrylate gels containing fumed silica are stable and are commercially available under the trade name LOCTITE®. These adhesives have some drawbacks because they include monomers which are lachrymatory, irritating, malodorous, and whose vapours polymerize, leaving white deposits on the substrates to be bonded.

The thixotropic adhesive gels including alkoxyalkyl cyanoacrylates, such as, for example, 2-methoxyethyl cyanoacrylate, or 2-ethoxyethyl cyanoacrylate, are preferred because they are practically odourless, the vapours do not polymerize, and are non-lachrymatory or irritating. However, such adhesives are less common, probably due to the different stability of the monomers, as described in the U.S. patent US4321180.

Thixotropic adhesives with said cyanoacrylates have been described, for example, in the U.S. patent US4837260, wherein the composition includes hydrophobic silica and an accelerator of the crown ether type, and in the international patent application WO-A-86/01276, wherein the composition comprises dry colloidal hydrophobic fumed silica.

In the European patent application EP-A-0323720 an adhesive composition is described comprising 2-ethoxyethyl cyanoacrylate and two thickening agents: polyalkyl(meth)acrylate and hydrophobic fumed silica. Therein, it is disclosed that the presence of an adhesion accelerator negatively influences the stability of the composition and, therefore, it is not included therein. As described in the European patent application EP-A-1369463, such composition is superior to the commonly used ethyl cyanoacrylate, regarding odour, fragility, flexibility and use in porous substrates, and has good heat stability and low volatility, but it has drawbacks in terms of adhesion speed on different substrates, particularly on beech wood.

In the European patent application EP-A-1369463 an adhesive composition is described comprising a 2-alkoxyalkyl cyanoacrylate as monomer, alkyl polymethacrylate, hydrophobic fumed silica, an accelerator, and significant amounts of acidic stabilizing agents between 50 and 5000 ppm (parts per million). This adhesive composition is not entirely satisfactory because the use of hydrophobic fumed silica has disadvantages in terms of handling due to its low apparent density. This component can also reduce the robustness of the composition against batch or supplier changes, due to occasional residues from acidic catalysts, or to the absorption of volatile substances during its storage.

In International patent application WO-A-01/12243 it is disclosed sterilized cyanoacrylate adhesive compositions thickened with polymers stable under sterilization conditions, which further comprise initiators, and thixotropic agents.

In Korean patent application KR-A-2012-0131802 it is disclosed a super glue composite using dimethyl 2-methylene malonate and several additives such as glyceryl triacetate plasticizers, initiators, thickeners and thixotropic agents.

In International patent application WO-A-2014/131650 it is disclosed a modified hot melt adhesive that contains cyanoacrylate, which is solid at room temperature and show high viscosity even at high temperatures, and further comprises plasticizers, initiators, thickeners and thixotropic agents.

The object of the present invention is an adhesive comprising:
1) a compound of general formula (I) 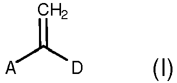 wherein
   A is selected from the group consisting of CN, CO₂Me and CO₂Et, and
   D is a group defined by the general formula (II) 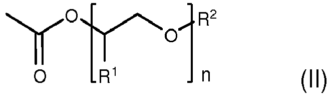
   wherein
   R¹ is selected from the group consisting of H and Me,
   R² is selected from the group consisting of Si(Me₃)₃, and a C₁-C₆ linear
   or branched alkyl chain, and
   n is comprised between 1 and 3,
   optionally combined with a compound of general formula (III) 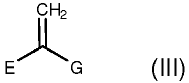 wherein
   E is selected from the group consisting of CN, CO₂Me and CO₂Et, and
   G is a carboxylic ester moiety CO₂R³, wherein R³ is selected from the group consisting of: C₁-C₁₈ linear or branched alkyl chain, trimethylsilylated C₁-C₃ alkyl chain, allyl, propargyl, cyclohexyl, cyclohexenyl, methylcyclohexyl, methylcyclohexenyl, ethylcyclohexyl, ethylcyclohexenyl, furfuryl, phenylethyl, phenoxyethyl, cyanoacrylate moiety, methacrylate moiety and acrylate moiety.
2) a thixotropic agent selected from the group consisting of hydrogenated castor oil, hydrogenated castor oil modified by reaction with an amine, and polyamides,
3) an accelerating agent,
4) a plasticizing agent selected from the group consisting of esters of C₂-C₄ carboxylic acids with C₂-C₅ alkyl alcohols having 2-4 hydroxyl groups,
5) a stabilizing agent, and
is substantially free of silica.

The authors of the present invention have developed a fast and universal adhesive in gel form that, thanks to a strong thixotropic effect, allows the application for bonding a wide variety of substrates in any kind of orientation. Furthermore, the adhesive includes a monomer that has an alkoxyalkyl ester, which is not irritating, is non-lachrymatory, is practically odourless, and does not produce white deposits on the substrates to be bonded.

In the present description as well as in the claims, the singular forms "a" and "an" include also the plural reference unless the context clearly indicates otherwise.

In this description, the percentages (%) are expressed in weight/weight unless otherwise indicated, and in the compositions, the sum of the percentages of the different components are adjusted to add up to 100%.

An adhesive means a substance that interposed between two substrates, is used to bond them.

The adhesive of the invention is substantially free of silica, this means in the context of the invention that this adhesive contains less than 0.01% by weight of silica, that is, an amount so low that, in case of being present, it does not act as a thixotropic agent. Silica means any type of silica: silica gel, spherical, precipitated, fumed, colloidal, either surface treated or not.

### Monomers: compounds of general formula (I) and (II)

The adhesive of the invention includes a compound of general formula (I), mentioned above, which is a monomer that polymerizes rapidly because the groups A and D polarize the molecule making it susceptible to a nucleophilic attack. This monomer is substantially odour-free, this means that either it has zero odours, or that its odour is very low.

When A is the group CN, is a cyanoacrylate; when A is the group CO₂Me, is methylidene malonate methyl ester, and when A is the group CO₂Et, is methylidene malonate ethyl ester.

The esters of general formula (II) can be defined generically as alkoxyalkyl esters, among which the following can be mentioned: 2-methoxyethyl, 2-ethoxyethyl, 2-propoxyethyl, 2-butoxyethyl, 2-isopropoxyethyl, 2-hexyloxyethyl, 2-amyloxyethyl, 2-ethoxybutyl, 2-methoxypropyl, and 2-(1-methoxy)propyl, among others. Other examples of alkoxyalkyl type monomers are described in the U.S. patent US6977278.

In a preferred embodiment, in the compound of general formula (I), A is the CN group. In another preferred embodiment R¹ is H and R² is Me or Et. In another preferred embodiment n is 1. In a more preferred embodiment A is the CN group, R¹ is H, R² is Me or Et, and n is 1, that is, in this more preferred embodiment the compound of general formula (I) is 2-methoxyethyl cyanoacrylate or 2-ethoxyethyl cyanoacrylate. In another preferred embodiment A is the CN group, R¹ is Me, R² is Me, and n is 1, that is, the compound of general formula (I) is 2-(1-methoxy)propyl cyanoacrylate.

Optionally, the adhesive of the invention includes a compound of general formula (III), mentioned above, which is a monomer that rapidly polymerizes because the groups E and G polarize the molecule making it susceptible to a nucleophilic attack. This monomer may be substantially odour-free, low odour or may have an odour. In the context of the invention, within the monomers substantially odour-free or low odour are also included those monomers which are not lachrymatory, and those whose vapours do not polymerize, so that they do not produce white deposits on the substrates to be bonded. These features are associated with low vapour pressures. Thus, for example, when R³ in the compound of general formula (III) is 2-ethylhexyl, furfuryl, cyclohexyl, cyclohexenyl, trimethylsilylmethyl or trimethylsilylethyl, the monomer is substantially odour-free or low odour.

In the case that the optional monomer of general formula (III) has a certain odour, its amount should not significantly influence the overall volatility of the composition. The possible presence of this monomer of general formula (III) may be desirable for a variety of reasons such as, for example, the following: the addition of small amounts of ethyl cyanoacrylate is suitable to optimise cost or modulate reactivity; the inclusion of butyl or 2-ethylhexyl cyanoacrylate enhances the solvency for additional components; crosslinking may be achieved by bifunctional cyanoacrylates; adjusting glass transition temperature can be performed by adding 2-octyl cyanoacrylate, and for enhancing hydrophobicity partially fluorinated or silylated alkyl cyanoacrylates may be added. The adhesive of the invention can include the combination of two or more monomers to adjust its applicative properties.

In a preferred embodiment, in the compound of general formula (III), E is the CN group. In another preferred embodiment G is a carboxylic ester moiety CO₂R³, wherein R³ is selected from the group consisting of: C₁-C₁₈ straight or branched alkyl chain, trimethylsilylated C₁-C₃ alkyl chain, cyclohexyl, cyclohexenyl, and furfuryl, more preferably from Me, Et, *i*-Pr, Bu, 2-ethylhexyl, and 2-octyl.

In another more preferred embodiment, the adhesive of the invention comprises a compound of general formula (III) in which E is the CN group, and G is a carboxylic ester moiety CO₂R³, wherein R³ is selected from the group consisting of Me, Et, *i*-Pr, Bu, 2-ethylhexyl, and 2-octyl.

The monomers used in the adhesive of the invention can be obtained, for example, according to the method described in the U.S. patent US6245933 and the references mentioned therein, or with the method described in the European patent application EP14382127.0.

In the adhesive of the invention, the total percentage of monomers is generally comprised between 50% and 90% by weight, preferably between 60% and 80% by weight, and more preferably between 65% and 75% by weight based on the total weight of the composition.

### Thixotropic agent

The adhesive of the invention comprises a thixotropic agent selected from the group consisting of hydrogenated castor oil, hydrogenated castor oil modified by reaction with an amine, and polyamides; preferably it is hydrogenated castor oil or hydrogenated castor oil modified by reaction with an amine.

The modified castor oil is preferably the product resulting from the reaction between hydrogenated castor oil and an aliphatic diamine, more preferably selected from the group consisting of 1,2-ethanediamine, 1,3-propanediamine and 1,6-hexanediamine, and still more preferably is 1,2-ethanediamine.

The product of the reaction between hydrogenated castor oil and an amine is a complex mixture comprising glycerides and amides, and is substantially free of diamine to avoid stability problems in the adhesive.

The incorporation of this thixotropic agent to the composition allows, surprisingly, the preparation of an adhesive with a significant thixotropic effect, without the need to use hydrophobic fumed silica, having a high stability with a low content of acid stabilizer, even in the presence of an accelerating agent.

The hydrogenated castor oil comes from a natural source, has relatively high density, the particle size is large, and has low absorption capacity. These properties contrast with those of hydrophobic fumed silica that has low apparent density, the particle size is small, and has high absorption capacity.

The hydrogenated castor oil is commercially available in micronized form under the trade name THIXIN® R (Elementis Specialties), or CRAYVALLAC® ANTISETTLE CVP (Arkema).

The modified hydrogenated castor oil is commercially available, for example, under the trade name EFKA® RM 1900 or 1920 (BASF) in micronized powder form with a mean particle size comprised between 5 and 9 µm; CRAYVALLAC® SF or MT (Arkema), or under the trade name THIXATROL® ST (Elementis Specialties), when the amine is 1,2-ethanediamine.

In the adhesive of the invention the thixotropic agent is preferably selected from the group consisting of hydrogenated castor oil, THIXATROL® ST, EFKA® RM 1900 or EFKA® RM 1920, CRAYVALLAC® SF and CRAYVALLAC® MT, and more preferably is EFKA® RM 1900 or EFKA® RM 1920, that is well known to the skilled in the art in the field of polymers, such as paints, varnishes and adhesives.

Polyamides are thixotropic agents also well known to the skilled in the art. They are commercially available under the trade name THIXATROL® (Elementis Specialties) and DISPARLON® (Kusumoto Chemicals). Polyamides may require to be activated, that is, dispersed and solvated in the composition, by the action of heat before providing the thixotropic effect. Among them can be mentioned, for example, the polyamides THIXATROL® MAX, DISPARLON® 6100, 6200, 6500, 6600, 6650 or 6750. The activation temperature is provided by the supplier of the polyamide, being generally comprised between 30° C and 100° C. In other cases, the polyamide is pre-activated or it may be pre-activated and may be dispersed directly in the composition, and does not require the action of heat to confer thixotropy to the system. Among them can be mentioned, for example, DISPARLON® A603-20x, A650-20X, A670-20M, A671-EZ, 6900-20X, or F-9030.

The thixotropic agent is present in an amount comprised between 0.25% and 10% by weight, preferably between 2.5% and 8% by weight, and still more preferably between 3% and 6% by weight based on the total weight of the composition.

### Accelerating agent

The adhesive of the invention includes an accelerating agent which improves the adhesion of the adhesive between the substrates. The presence of the accelerating agent is recommendable in the case of porous or deactivating substrates, such as some types of wood, leather, cork, paper, cardboard and the like.

Accelerating agents are well known in prior art and are described, for example, in the U.S. patents US4171416, US4837260, US4980086 and US4906317. The accelerating agents suitable for the adhesive of the present invention are preferably selected from the group consisting of crown ethers, such as, for example, 18-crown-6 ether and dibenzo-18-crown-6 ether; silylated crown ethers; calixarenes tetra-*t*-butyl esters; and dimethyl ethers of PEG 400, PEG 500, PEG 600 and PEG 1000; more preferably is a crown ether, still more preferably is selected from 18-crown-6 ether and dibenzo-18-crown-6 ether; and still more preferably is dibenzo-18-crown-6.

These accelerating agents are well known to the skilled in the art and are commercially available. For example, crown ethers and calixarenes tetra-*t*-butyl esters through the company Alfa Aesar, and dimethyl ethers of PEG through the company Sigma Aldrich.

The accelerating agent is usually present in an amount comprised between 0.05% and 0.2% by weight based on the total weight of the composition. When the accelerating agent is dibenzo-18-crown-6, it is generally present in an amount comprised between 0.08% and 0.2% by weight, preferably between 0.1% and 0.15% by weight based on the total weight of the composition; and when the accelerating agent is 18-crown-6, it is generally present in an amount comprised between 0.05% and 0.15% by weight, preferably between 0.07% and 0.1% by weight based on the total weight of the composition.

### Plasticizing agent

The adhesive of the invention comprises a plasticizing agent.

Plasticizers suited for use in compositions containing cyanoacrylates are described in the international patent application WO-A-2010/046412. Among them can be mentioned: acetates such as triacetin; phthalates, such as dioctyl phthalate; trimellitates such as trioctyl trimellitate; adipates such as dimethyl adipate; and benzoates such as diethylene glycol dibenzoate.

The plasticizers to be used in the adhesive of the invention are selected from the group consisting of esters of C₂-C₄ carboxylic acids with C₂-C₅ alkyl alcohols having 2-4 hydroxyl groups, for example, ethylene glycol, propylene glycol, glycerine, trimethylolpropane, or pentaerythritol, optionally ethoxylated, preferably from acetates of C₂-C₅ alkyl alcohols having 2-4 hydroxyl groups, optionally ethoxylated, and more preferably from acetates of C₂-C₃ alkyl alcohols having 2-3 hydroxyl groups, such as, for example, glycerine triacetate or ethylene glycol diacetate.

Preferably the plasticizing agent is selected from triacetin and ethylene glycol acetate.

The plasticizing agent is usually present in a percentage comprised between 8% and 25% by weight, preferably between 10% and 18% by weight based on the total weight of the composition.

Occasionally, the plasticizing agent can be replaced in the adhesive by the use of a monomer of general formula (III) which is internally plasticized such as, for example, 2-ethylhexyl cyanoacrylate.

### Stabilizing agent

The adhesive of the invention comprises a stabilizing agent selected from the group consisting of radical stabilizing agents, acid stabilizing agents, and mixtures thereof. The radical stabilizers help to prevent premature polymerization due to radical mechanisms, while the acid stabilizers, also known as anionic stabilizers, help to prevent premature polymerization of the adhesive due to anionic mechanisms. Among the acid stabilizers are those that stabilize in vapour phase to prevent the polymerization of the monomer in the empty space of the containers.

The radical stabilizing agents are radical polymerization inhibitors, and are preferably selected from the group consisting of 4-methoxyphenol, hydroquinone, hydroquinone monomethyl ether, hydroxytoluene butyl ether, hydroxyanisole butyl ether, 2,2'-methylene-bis-(6-*tert*-butyl-4-methylphenol), and mixtures thereof; more preferably from hydroquinone monomethyl ether, 2,2'-methylene-bis-(6-*tert*-butyl-4-methylphenol), and mixtures thereof.

In the adhesive of the invention, the content of the radical stabilizing agent is generally comprised between 0.03% and 0.7% by weight. In the case of using hydroquinone monomethyl ether, it is preferably used in a range comprised between 0.03% and 0.07% by weight, more preferably between 0.04% and 0.06% by weight based on the total weight of the composition, and 2,2'-methylene-bis-(6-*tert*-butyl-4-methylphenol) is preferably used in a range comprised between 0.3% and 0.7% by weight, and more preferably between 0.4% and 0.6% by weight based on the total weight of the composition.

The acid stabilizing agents are inhibitors of the anionic polymerization, and are selected from the group consisting of Bronsted acids, Lewis acids, and mixtures thereof. The acid stabilizing agents are selected preferably from the group consisting of methanesulfonic acid, *p*-toluenesulfonic acid, p-toluenesulfonic acid anhydride, boron trifluoride, boron trifluoride etherate complex, sulfur dioxide, and mixtures thereof, more preferably from boron trifluoride etherate complex, sulfur dioxide, and mixtures thereof, and still more preferably is boron trifluoride etherate, alone or in combination with sulfur dioxide.

In the adhesive of the invention the content of acid stabilizing agent is generally comprised between 0.0004% and 0.0035% by weight, equivalent to 4 and 35 ppm respectively, and preferably between 0.0005% and 0.0027% by weight, equivalent to 5 and 27 ppm respectively.

In an especially preferred embodiment of the adhesive, the stabilizing agent is a combination of boron trifluoride etherate complex, alone or in combination with sulfur dioxide, as acid stabilizing agent, and hydroquinone monomethyl ether, 2,2'-methylene-bis-(6-*tert*-butyl-4-methylphenol) or mixtures thereof, as radical stabilizing agent; being more preferred the combination of between 0.0004% and 0.001% by weight, equivalent to 4 and 10 ppm respectively, more preferably between 0.0005% and 0.0007% by weight, equivalent to 5 and 7 ppm respectively, of boron trifluoride etherate complex based on the total weight of the composition, optionally combined with between 0.0008% and 0.0025% by weight, equivalent to 8 and 25 ppm respectively, preferably between 0.0015% and 0.0020% by weight, equivalent to 15 and 20 ppm respectively, of sulfur dioxide based on the total weight of the composition, as acid stabilizing agent, and between 0.03% and 0.07% by weight, more preferably between 0.04% and 0.06% by weight of hydroquinone monomethyl ether, between 0.3% and 0.7% by weight, preferably between 0.4% and 0.6% by weight of 2,2'-methylene-bis-(6-*tert*-butyl-4-methylphenol) based on the total weight of the composition, or mixtures thereof, as radical stabilizing agent.

### Additional components

The adhesive of the invention usually comprises one or more additional components such as, for example, a thickener, a filler, and an adhesion promoter. Preferably comprises a thickener, and more preferably further comprises an adhesion promoter and/or a filler.

A thickening agent suitable for the adhesive of the invention can be selected from those which are compatible with the monomers that contains. Among them can be mentioned poly(meth)acrylates, acylated cellulose polymers, for example cellulose acetate, polyvinyl acetates, partially hydrolysed polyvinyl acetates, polyvinylpyrrolidones, polyoxylates, polycaprolactones, polycyanoacrylates, vinyl acetate copolymers, for example, with vinyl chloride, copolymers of (meth)acrylates with butadiene and styrene, copolymers of vinyl chloride and acrylonitrile, copolymers of ethylene and vinyl acetate, poly[butyleneterephthalate-co-polyethyleneglycolterephthalate] and copolymers of lactic acid and caprolactone.

These thickening agents are well known to the skilled in the art and have been described in the prior art. Thus, for example, poly(meth)acrylates are disclosed in the U.S. patents US3282773, US3572841 and US3692752; copolymers of (meth)acrylates with butadiene and styrene, and copolymers of vinyl chloride and acrylonitrile in the U.S. patent US4102945; polyoxylates (polyesters of oxalic acid), polycaprolactones and copolymers of lactic acid and caprolactone in the international patent application WO-A-01/12243; poly[butyleneterephthalate-co-polyethyleneglycolterephthalate] polymer in the international patent application WO-A-2007/049258, polycyanoacrylates in U.S. patent US2794788; the acylated cellulose polymers in the U.S. patent US3699127, and copolymers of vinyl acetate and vinyl chloride in the international patent application WO-A-2004/061030.

Preferably, in the adhesive of the invention the thickening agent is selected from the group consisting of poly(meth)acrylates, polyvinylpyrrolidones, polyvinyl acetates, partially hydrolyzed polyvinyl acetates, vinyl acetate copolymers, and acylated cellulose polymers; more preferably is a poly(meth)acrylate, still more preferably is methyl polymethacrylate, and still more preferably is methyl polymethacrylate with an average molecular weight comprised between 400,000 and 500,000.

The thickening agent should be dry and substantially free of peroxides to prevent a premature polymerization of the monomer, as described in the European patent application EP-A-0323720.

The thickening agent is typically present in a percentage comprised between 4% and 12% by weight, preferably between 6 and 8% by weight based on the total weight of the composition.

The adhesive of the invention may also include an adhesion promoting agent for glass, plastics and/or metals such as, for example, alkoxysilane compounds, an acid or an aromatic carboxylic anhydride or an α-substituted acrylic acid, optionally in the form of anhydride. Among the acids and anhydrides can be mentioned trimellitic acid, trimellitic anhydride, pyromellitic acid, pyromellitic anhydride, dianhydride of 3,3',4,4'-benzophenone tetracarboxylic acid, itaconic acid, itaconic anhydride, and 3-buten-1,2,3-tricarboxylic acid. Usually the content of aromatic carboxylic acid in the adhesive is comprised between 0.04% and 0.1% by weight based on the total weight of the composition.

It may also further include a filler such as, for example, low density polyethylene powder, polyvinylidene fluoride (PVDF), or polytetrafluoroethylene (PTFE). Usually the filler content in the adhesive is comprised between 2% and 5% by weight based on the total weight of the composition.

A particularly preferred adhesive comprises:
- between 50% and 90% by weight of the compound of general formula (I), optionally combined with the compound of general formula (III), being the compound of general formula (I) preferably selected from 2-ethoxyethyl cyanoacrylate, 2-methoxyethyl cyanoacrylate, and 2-(1-methoxy)propyl cyanoacrylate,
- between 0.25% and 10% by weight of a thixotropic agent selected from the group consisting of hydrogenated castor oil, hydrogenated castor oil modified by reaction with an amine, and polyamides, where the modified castor oil is preferably the product resulting from the reaction between hydrogenated castor oil and an aliphatic diamine, more preferably selected from the group consisting of 1,2-ethanediamine, 1,3-propanediamine and 1,6-hexanediamine, and still more preferably is 1,2-ethanediamine,
- between 0.05% and 0.2% by weight of an accelerating agent, preferably a crown ether, more preferably selected from the group consisting of dibenzo-18-crown-6 ether and 18-crown-6 ether,
- between 4% and 12% by weight of a thickener, preferably methyl polymethacrylate, more preferably with an average molecular weight comprised between 400,000 and 500,000,
- between 8% and 25% of a plasticizing agent selected from the group consisting of esters of C₂-C₄ carboxylic acids with C₂-C₅ alkyl alcohols having 2-4 hydroxyl groups, preferably selected from glycerine triacetate and ethylene glycol diacetate,
- between 0.03% and 0.7% by weight of a radical stabilizing agent, preferably selected from hydroquinone monomethyl ether, 2,2'-methylene-bis-(6-*tert*-butyl-4-methylphenol), and mixtures thereof,
- between 0.0004% and 0.0035% by weight, equivalent to 4 and 35 ppm respectively, of an acid stabilizing agent, preferably the BF₃.etherate complex,
optionally in combination with sulfur dioxide,
and is substantially free of silica.

Optionally the adhesive further comprises a compound of general formula (III) as described above. Preferably E is the CN group. In another preferred embodiment G is a carboxylic ester moiety CO₂R³, wherein R³ is selected from the group consisting of: C₂-C₁₈ straight or branched alkyl chain, trimethylsilylated C₁-C₃ alkyl chain, cyclohexyl, cyclohexenyl, and furfuryl, more preferably from Me, Et, *i*-Pr, Bu, 2-ethylhexyl, and 2-octyl.

Optionally the adhesive of the invention further comprises a filler and/or an adhesion promoter.

Surprisingly, it has been found that the inclusion of an organic thixotropic agent in an adhesive comprising a monomer of rapid polymerization of general formula (I) allows the preparation of a thixotropic adhesive in gel form with good heat stability, suitable for multiple types of surfaces, including smooth and porous surfaces, such as, for example, paper, cardboard, textiles, expanded polystyrene, wood, or leather, and to be applied in different orientations, with a low content of acid stabilizing agents, which allows a faster bonding of the substrates. Furthermore, since the monomers contain an alkoxyalkyl ester, the adhesive is non-lachrymatory, non-irritating, and vapours do not polymerize.

Therefore, also part of the object of the invention is the use of the adhesive of the invention as universal adhesive for bonding substrates, both smooth and porous, in any orientation. Given its viscosity and thixotropic behaviour, the adhesive of the invention can also be used for bonding uneven substrates, as well as to fill small gaps or notches in or between the substrates to be bonded.

### Preparation method

The usual method for preparing the adhesive of the invention comprises a first step wherein the radical stabilizer, the acid stabilizer and the adhesion promoter, if present, are mixed with the monomer of general formula (I). The mixture is heated to a temperature comprised between 50° C and 75° C, preferably 65° C, and the dry and peroxide-free thickening agent is added. The mixture is kept under stirring usually for a period comprised between 60 and 90 min until complete dissolution of the polymer.

Separately, the organic thixotropic agent is mixed with the plasticizing agent. Occasionally, when the organic thixotropic agent is a polyamide, it is washed with a dilute solution of methanesulfonic acid in acetone at 1% by weight/weight, it is rinsed with acetone, and it is dried. Then, the accelerating agent is incorporated to this mixture, and said mixture is added to the previously prepared mixture with the monomer, whilst cooling naturally to room temperature. Once reached room temperature, the vapour phase acid stabilizer can be added, and the adhesive is stored, for example, in stoppered high-density polyethylene bottles.

The skilled in the art may include variations to this method depending on the particular characteristics of the different components used in the adhesive.

### Application tests

Viscosity measurements may be made using a rheometer at different speeds to determine the thixotropic index of the adhesive of the invention, by methods well known to the skilled in the art.

Application tests of the adhesive of the invention can be performed, for example, by applying a given amount of adhesive to a substrate and assembling a second identical substrate atop. The two substrates are clamped with clips and the timer starts. In the context of the invention, the fixture time is the minimum time necessary for the so-bonded substrates, free from clips, to hold a 3 kg weight for a minimum of 10 seconds in a vertical orientation without breaking. Each test is usually repeated at least 3 times.

Accelerated stability tests can also be performed, for example, by subjecting a sample of the adhesive in a sealed aluminum tube at elevated temperature, for example comprised between 80° C and 85° C during a specific time period, for example between 2 and 5 days, and comparing the increase of viscosity and fixture time relative to a sample which has not been subjected to the test.

The invention includes the following embodiments:
1.- Adhesive characterized in that it comprises:
   1) a compound of general formula (I) 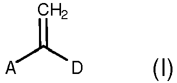 wherein
      A is selected from the group consisting of CN, CO₂Me and CO₂Et, and
      D is a group defined by the general formula (II) 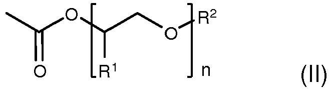
      wherein
      R¹ is selected from the group consisting of H and Me,
      R² is selected from the group consisting of Si(Me₃)₃, and a C₁-C₆ linear
      or branched alkyl chain, and
      n is comprised between 1 and 3,
      optionally combined with a compound of general formula (III) 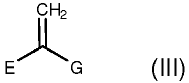 wherein
      E is selected from the group consisting of CN, CO₂Me and CO₂Et, and
      G is a carboxylic ester moiety CO₂R³, wherein R³ is selected from the group consisting of: C₁-C₁₈ linear or branched alkyl chain, trimethylsilylated C₁-C₃ alkyl chain, allyl, propargyl, cyclohexyl, cyclohexenyl, methylcyclohexyl, methylcyclohexenyl, ethylcyclohexyl, ethylcyclohexenyl, furfuryl, phenylethyl, phenoxyethyl, cyanoacrylate moiety, methacrylate moiety and acrylate moiety.
   2) a thixotropic agent selected from the group consisting of hydrogenated castor oil, hydrogenated castor oil modified by reaction with an amine, and polyamides,
   3) an accelerating agent,
   4) a plasticizer selected from the group consisting of esters C₂-C₄ carboxylic acids with C₂-C₅ alkyl alcohols having 2-4 hydroxyl groups,
   5) a stabilizing agent, and
   is substantially free of silica.
2.- Adhesive according to embodiment 1, characterized in that the group A is the CN group.
3.- Adhesive according to embodiments 1 or 2, characterized in that R¹ is H, R² is Me or Et, and n is 1.
4.- Adhesive according to any of embodiments 1 to 3, characterized in that it comprises a compound of general formula (III) wherein E is the CN group, and R³ is selected from the group consisting of: C₂-C₁₈ linear or branched alkyl chain, trimethylsilylated C₁-C₃ alkyl chain, cyclohexyl, cyclohexenyl, and furfuryl.
5.- Adhesive according to any of embodiments 1 to 4, characterized in that the total percentage of the compound of general formula (I) and the compound of general formula (III) is comprised between 50% and 90% by weight based on the total weight of the composition.
6.- Adhesive according to any of embodiments 1 to 5, characterized in that the thixotropic agent is the product resulting from the reaction between hydrogenated castor oil and an aliphatic diamine, selected from 1,2-ethanediamine, 1,3-propanediamine and 1,6-hexanediamine.
7.- Adhesive according to any of embodiments 1 to 6, characterized in that the thixotropic agent is present in an amount comprised between 0.25% and 10% by weight based on the total weight of composition.
8.- Adhesive according to any of embodiments 1 to 7, characterized in that the accelerating agent is selected from the group consisting of crown ethers; silylated crown ethers; calixarenes tetra-*t*-butyl esters; and dimethyl ethers of PEG 400, PEG 500, PEG 600 and PEG 1000.
9.- Adhesive according to embodiment 8, characterized in that the accelerating agent is selected from the group consisting of 18-crown-6 ether and dibenzo-18-crown-6 ether.
10.- Adhesive according to any of embodiments 1 to 9, characterized in that the accelerating agent is present in an amount comprised between 0.05% and 0.2% by weight based on the total weight of the composition.
11.- Adhesive according to any of embodiments 1 to 10, characterized in that the plasticizing agent is selected from the group consisting of acetates of C₂-C₅ alkyl alcohols having 2-4 hydroxyl groups.
12.- Adhesive according to embodiment 12, characterized in that the plasticizing agent is present in an amount comprised between 8% and 25% by weight based on the total weight of the composition.
13.- Adhesive according to any of embodiments 1 to 12, characterized in that the stabilizing agent is selected from the group consisting of radical stabilizing agents, acid stabilizing agents, and mixtures thereof.
14.- Adhesive according to embodiment 13, characterized in that the radical stabilizer is selected from the group consisting of 4-methoxyphenol, hydroquinone, hydroquinone monomethyl ether, hydroxytoluene butyl ether, hydroxyanisole butyl ether, 2,2'-methylene-bis-(6-*tert*-butyl-4-methylphenol), and mixtures thereof.
15.- Adhesive according to embodiment 13, characterized in that the acid stabilizing agent is selected from the group consisting of methanesulfonic acid, *p*-toluenesulfonic acid, *p*-toluenesulfonic acid anhydride, boron trifluoride, boron trifluoride-etherate complex, sulfur dioxide, and mixtures thereof.
16.- Adhesive according to embodiment 13, characterized in that the radical stabilizing agent is present in an amount comprised between 0.03% and 0.7% by weight based on the total weight of the composition and the acid stabilizing agent is present in an amount comprised between 0.0004% and 0.0035% by weight based on the total weight of the composition.
17.- Adhesive according to any of embodiments 1 to 16, characterized in that it further comprises a thickener, an adhesion promoter and/or a filler.
18.- Adhesive according to embodiment 17, characterized in that the thickener is selected from the group consisting of poly(meth)acrylates, polyvinylpyrrolidones, polyvinyl acetates, partially hydrolyzed polyvinyl acetates, vinyl acetate copolymers, and acylated cellulose polymers.
19.- Adhesive according to embodiment 18, characterized in that the thickener is methyl polymethacrylate.
20.- Adhesive according to any of embodiments 1 to 19, characterized in that the thickener is comprised between 4% and 12% by weight based on the total weight of the composition.
21.- Adhesive according to the embodiment 17, characterized in that it further comprises an adhesion promoter.
22.- Adhesive according to embodiments 17 or 21, characterized in that it further comprises a filler.
23.- Adhesive according to embodiment 1, characterized in that it comprises:
   - between 50% and 90% by weight of the compound of general formula (I) optionally combined with the compound of general formula (III),
   - between 0.25% and 10% by weight of a thixotropic agent selected from the group consisting of hydrogenated castor oil, hydrogenated castor oil modified by reaction with an amine, and polyamides,
   - between 0.05% and 0.2% by weight of an accelerator agent,
   - between 4% and 12% by weight of a thickener,
   - between 8% and 25% of a plasticizing agent selected from the group consisting of esters of C₂-C₄ carboxylic acids with C₂-C₅ alkyl alcohols having 2-4 hydroxyl groups,
   - between 0.03% and 0.7% by weight of a radical stabilizing agent,
   - between 0.0004% and 0.0035% by weight, equivalent to 4 and 35 ppm respectively, of an acid stabilizing agent,
   and is substantially free of silica.
24.- Adhesive according to embodiment 23, characterized in that the compound of general formula (I), is selected from 2-ethoxyethyl cyanoacrylate, 2-methoxyethyl cyanoacrylate, and 2-(1-methoxy)propyl cyanoacrylate; the thixotropic agent is the product resulting from the reaction between hydrogenated castor oil and an aliphatic diamine, selected from the group consisting of 1,2-ethanediamine, 1,3-propanediamine and 1,6-hexanediamine; the accelerating agent is a crown ether selected from the group consisting of dibenzo-18-crown-6 ether and 18-crown-6 ether; the thickener is methyl polymethacrylate; the plasticizing agent is selected from glycerine triacetate and ethylene glycol diacetate; the radical stabilizing agent is selected from hydroquinone monomethyl ether, 2,2'-methylene-bis-(6-*tert*-butyl-4-methylphenol), and mixtures thereof; and the acid stabilizing agent is BF₃.etherate complex, optionally in combination with sulfur dioxide.
25.- Use of the adhesive according to any of embodiments 1 to 24 as universal adhesive for bonding substrates, both smooth and porous, in any orientation.

Next, several examples of the invention are provided for illustrative but not limitative purposes.

### Examples

### Example 1: Preparation of an adhesive in gel form

A gel adhesive was prepared with the components listed in Table I:

**TABLE I**

| **Component** | **Function** | **% by weight** |
|---|---|---|
| 2-Methoxyethyl cyanoacrylate (MECA) | Monomer | 71.3445 |
| Polymethyl methacrylate (Degacryl® M449, Evonik) | Thickener | 8 |
| Glycerine triacetate | Plasticizer | 14 |
| Modified hydrogenated castor oil (RM1920, BASF) | Organic thixotropic agent | 6 |
| Dibenzo-18-crown-6 ether | Accelerator | 0.1 |
| 2-Methoxyhydroquinone (MEHQ) | Radical stabilizer | 0.05 |
| 2.2'-Methylenebis(6-*tert*-butyl-4-methylphenol) (MBETBP) | Radical stabilizer | 0.5 |
| Boron trifluoride diethyl etherate (≥ 46.3% BF₃) | Acid stabilizer | 0.001 |
| Sulphur dioxide | Vapour phase stabilizer | 0.002 |
| Trimellitic acid | Metal adhesion promoter | 0.0025 |

The process for preparing this gel consisted of adding the radical stabilizers, the anionic stabilizer and the adhesion promoter to the monomer MECA. The mixture was heated to 65° C and peroxide-free PMMA was added. It was kept under stirring for a period comprised between 60 and 90 min until complete dissolution of the polymer.

In a speedmixer centrifuge (Model ARE-350, Thinky, USA) the organic thixotropic agent was mixed with glycerine triacetate. Subsequently, the crown ether was added to this mixture, and said mixture was added to the monomer mixture previously prepared, whilst cooling naturally from 65° C to room temperature. Once reached this temperature, sulfur dioxide was added. The composition was stored in stoppered high-density polyethylene bottles.

The adhesive thus obtained was subjected to a rheological analysis, to a stability test and to application tests, as described in Example 4.

### Example 2: Preparation of an adhesive in gel form

A gel adhesive was prepared with the components listed in Table II:

**TABLE II**

| **Component** | **Function** | **% by weight** |
|---|---|---|
| 2-Methoxyethyl cyanoacrylate (MECA) | Monomer | 71.3445 |
| Polymethyl methacrylate (Degacryl® M449, Evonik) | Thickener | 8 |
| Glycerine triacetate | Plasticizer | 17 |
| Modified hydrogenated castor oil (RM1920, BASF) | Organic thixotropic agent | 3 |
| Dibenzo-18-crown-6 ether | Accelerator | 0.1 |
| 2-Methoxyhydroquinone (MEHQ) | Radical stabilizer | 0.05 |
| 2,2'-Methylenebis(6-*tert*-butyl-4-methylphenol) (MBETBP) | Radical stabilizer | 0.5 |
| Boron trifluoride diethyl etherate (≥ 46.3% BF₃) | Anionic stabilizer | 0.001 |
| Sulphur dioxide | Vapour phase stabilizer | 0.002 |
| Trimellitic acid | Metal adhesion promoter | 0.0025 |

The process for preparing this adhesive was substantially the same as the one employed in Example 1. The adhesive thus obtained was subjected to a rheological analysis, to a stability test and to application tests, as described in Example 4.

### Example 3: Preparation of an adhesive in gel form

A gel adhesive was prepared with the components listed in Table III:

**TABLE III**

| **Component** | **Function** | **% by weight** |
|---|---|---|
| 2-Methoxyethyl cyanoacrylate (MECA) | Monomer | 76.087 |
| Polymethyl methacrylate (Degacryl® M449, Evonik) | Thickener | 6 |
| Glycerine triacetate | Plasticizer | 11.31 |
| Modified hydrogenated castor oil (RM1920, BASF) | Organic thixotropic agent | 3 |
| Dibenzo-18-crown-6 ether | Accelerator | 0.05 |
| 2-Methoxyhydroquinone (MEHQ) | Radical stabilizer | 0.05 |
| 2,2'-Methylenebis(6-*tert*-butyl-4-methylphenol) (MBETBP) | Radical stabilizer | 0.5 |
| Boron trifluoride diethyl etherate (≥ 46.3% BF₃) | Anionic stabilizer | 0.001 |
| Sulphur dioxide | Vapour phase stabilizer | 0.002 |

The process for preparing this adhesive was substantially the same as the one employed in Example 1. The adhesive thus obtained was subjected to a rheological analysis, to a stability test and to application tests, as described in Example 4.

### Example 4: Application tests

The application tests of the adhesives of the invention were made by applying a single drop of approximately 100 µL volume to a substrate and adjoining a second identical substrate atop. The two substrates were clamped with clips and the timer started. The fixture time was the minimum time required for the so-bonded substrates, free from clips, to hold a 3 kg weight for a minimum of 10 seconds in a vertical orientation without breaking. Each test was repeated at least 3 times.

Viscosity measurement was made using a TA Instruments Rheometer DHR at a temperature of 25º C.

The stability tests were performed by filling 3 g of the adhesive of the invention into aluminum tubes (cyanoacrylate grade), which were sealed and placed in an oven in a vertical orientation at a temperature of 82° C for a period of 3 days. Viscosity and fixture time were determined before and after 3 days exposure to that temperature. Adhesives that were considered stable showed increases in fixture time of less than or equal to 20%, and less than 1.5 times increase in viscosity relative to a sample not subjected to the accelerated stability test.

The tests performed with the adhesives prepared in examples 1 to 3 are shown in Table IV:

**TABLE IV**

| Example | Fixture time (s) | | | (H) Viscosity @ 3,14 rad/s and 25° C (Pa.s) | (L) Viscosity @ 31,4 rad/s and 25° C (Pa.s) | Thixotropy index (H/L) | Stability 82° C (3 days) |
|---|---|---|---|---|---|---|---|
| | Beech wood | PC | Mild steel | | | | |
| 1 | 30 | 60 | 30 | 171.80 | 48.62 | 3.53 | Stable |
| 2 | 45 | 90 | 30 | 25.14 | 8.94 | 2.81 | Stable |
| 3 | 120 | 120-135 | 45-60 | 43.93 | 7.68 | 5.72 | Stable |

| | | | | | | | |
|---|---|---|---|---|---|---|---|
| PC = polycarbonate | | | | | | | |

It can be observed that fixture times of the adhesive of the invention on different substrates are suitable for a fast adhesive, although it allows correcting the position of the substrates, for example, by adjusting the amount of accelerating agent (compare examples 1 and 2 to example 3), and universal application. It can also be observed that the thixotropy index is high, so that the adhesive has a gel appearance that fluidizes at the moment of application. Such thixotropic effect allows the application of the adhesive on vertical surfaces and ceilings without sagging.

## Claims

1. Adhesive **characterized in that** it comprises:
1) a compound of general formula (I) 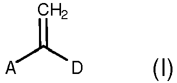 wherein
A is selected from the group consisting of CN, CO₂Me and CO₂Et, and
D is a group defined by the general formula (II) 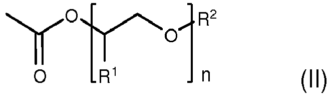
wherein
R¹ is selected from the group consisting of H and Me,
R² is selected from the group consisting of Si(Me₃)₃, and a C₁-C₆ linear
or branched alkyl chain, and
n is comprised between 1 and 3,
optionally combined with a compound of general formula (III) 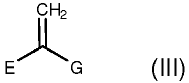 wherein
E is selected from the group consisting of CN, CO₂Me and CO₂Et, and
G is a carboxylic ester moiety CO₂R³, wherein R³ is selected from the group consisting of: C₁-C₁₈ linear or branched alkyl chain, trimethylsilylated C₁-C₃ alkyl chain, allyl, propargyl, cyclohexyl, cyclohexenyl, methylcyclohexyl, methylcyclohexenyl, ethylcyclohexyl, ethylcyclohexenyl, furfuryl, phenylethyl, phenoxyethyl, cyanoacrylate moiety, methacrylate moiety and acrylate moiety.
2) a thixotropic agent selected from the group consisting of hydrogenated castor oil, hydrogenated castor oil modified by reaction with an amine, and polyamides,
3) an accelerating agent,
4) a plasticizing agent selected from the group consisting of esters of C₂-C₄ carboxylic acids with C₂-C₅ alkyl alcohols having 2-4 hydroxyl groups,
5) a stabilizing agent, and
the adhesive contains less than 0.01% by weight of silica.

2. Adhesive according to claim 1, **characterized in that** the group A is the CN group.

3. Adhesive according to claims 1 or 2, **characterized in that** R¹ is H, R² is Me or Et, and n is 1.

4. Adhesive according to any of claims 1 to 3, **characterized in that** it comprises a compound of general formula (III), wherein E is the CN group, and R³ is selected from the group consisting of: C₁-C₁₈ straight or branched alkyl chain, trimethylsilylated C₁-C₃ alkyl chain, cyclohexyl, cyclohexenyl, and furfuryl.

5. Adhesive according to any of claims 1 to 4, **characterized in that** the thixotropic agent is the product resulting from the reaction between hydrogenated castor oil and an aliphatic diamine, selected from 1,2-ethanediamine, 1,3-propanediamine and 1,6-hexanediamine.

6. Adhesive according to any of claims 1 to 5, **characterized in that** the accelerating agent is selected from the group consisting of crown ethers; silylated crown ethers; calixarenes tetra-*t*-butyl esters; and dimethyl ethers of PEG 400, PEG 500, PEG 600 and PEG 1000.

7. Adhesive according to claim 6, **characterized in that** the accelerating agent is selected from the group consisting of 18-crown-6 ether and dibenzo-18-crown-6 ether.

8. Adhesive according to any of claims 1 to 7, **characterized in that** the plasticizing agent is selected from the group consisting of acetates of C₂-C₅ alkyl alcohols having 2-4 hydroxyl groups.

9. Adhesive according to any of claims 1 to 8, **characterized in that** the stabilizing agent is selected from the group consisting of radical stabilizing agents, acid stabilizing agents, and mixtures thereof.

10. Adhesive according to any of claims 1 to 9, **characterized in that** it further comprises a thickener, an adhesion promoter and/or a filler.

11. Adhesive according to claim 10, **characterized in that** the thickener is selected from the group consisting of poly(meth)acrylates, polyvinylpyrrolidones, polyvinyl acetates, partially hydrolyzed polyvinyl acetates, vinyl acetate copolymers, and acylated cellulose polymers.

12. Adhesive according to claim 11, **characterized in that** the thickener is methyl polymethacrylate.

13. Adhesive according to claim 1, **characterized in that** it comprises:
- between 50% and 90% by weight of the compound of general formula (I),
- between 0.25% and 10% by weight of a thixotropic agent selected from the group consisting of hydrogenated castor oil, hydrogenated castor oil modified by reaction with an amine, and polyamides,
- between 0.05% and 0.2% by weight of an accelerating agent,
- between 4% and 12% by weight of a thickener,
- between 8% and 25% of a plasticizing agent selected from the group consisting of esters of C₂-C₄ carboxylic acids with C₂-C₅ alkyl alcohols having 2-4 hydroxyl groups,
- between 0.03% and 0.7% by weight of a radical stabilizing agent,
- between 0.0004% and 0.0035% by weight, equivalent to 4 and 35 ppm respectively, of an acid stabilizing agent,
and is substantially free of silica.

14. Adhesive according to claim 13, **characterized in that** the compound of general formula (I) is selected from 2-ethoxyethyl cyanoacrylate, 2-methoxyethyl cyanoacrylate, and 2-(1-methoxy)propyl cyanoacrylate; the thixotropic agent is the product resulting from the reaction between hydrogenated castor oil and an aliphatic diamine, selected from the group consisting of 1,2-ethanediamine, 1,3-propanediamine and 1,6-hexanediamine; the accelerating agent is a crown ether selected from the group consisting of dibenzo-18-crown-6 ether and 18-crown-6 ether; the thickener is methyl polymethacrylate; the plasticizing agent is selected from glycerine triacetate and ethylene glycol diacetate; the radical stabilizing agent is selected from hydroquinone monomethyl ether, 2,2'-methylene-bis-(6-*tert*-butyl-4-methylphenol), and mixtures thereof; and the acid stabilizing agent is the BF₃.etherate complex optionally in combination with sulfur dioxide.

15. Use of the adhesive according to any of claims 1 to 14 as universal adhesive for bonding substrates, both smooth and porous, in any orientation.

## Patentansprüche

1. Klebstoff, **dadurch gekennzeichnet, dass** er umfasst:
1) eine Verbindung der allgemeinen Formel (I) 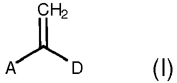 worin
A ausgewählt ist aus der Gruppe, bestehend aus CN, CO₂Me und CO₂Et, und
D eine Gruppe ist, die definiert ist durch die allgemeine Formel (II) 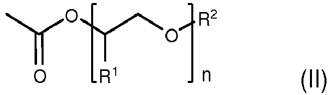
worin
R¹ ausgewählt ist aus der Gruppe, bestehend aus H und Me,
R² ausgewählt ist aus der Gruppe, bestehend aus Si(Me₃)₃ und einer linearen oder verzweigten C₁-C₆-Alkylkette und
N zwischen 1 und 3 umfasst ist,
gegebenenfalls kombiniert mit einer Verbindung der allgemeinen Formel (III) 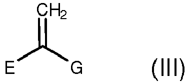 worin
E ausgewählt ist aus der Gruppe, bestehend aus CN, CO₂Me und CO₂Et und G eine Carbonsäureestereinheit CO₂R³ ist, wobei R³ ausgewählt ist aus der Gruppe, bestehend aus: linearer oder verzweigter C₁-C₁₈-Alkylkette, trimethylsilylierter C₁-C₃-Alkylkette, Allyl, Propargyl, Cyclohexyl, Cyclohexenyl, Methylcyclohexyl, Methylcyclohexenyl, Ethylcyclohexyl, Ethylcyclohexenyl, Furfuryl, Phenylethyl, Phenoxyethyl, einer Cyanoacrylat-Einheit, Methacrylat-Einheit und Acrylat-Einheit;
2) ein Thixotropiermittel, ausgewählt aus der Gruppe, bestehend aus hydriertem Rizinusöl, hydriertem Rizinusöl, das durch Umsetzung mit einem Amin modifiziert wurde, und Polyamiden,
3) einen Beschleuniger,
4) einen Weichmacher, ausgewählt aus der Gruppe, bestehend aus Estern von C₂-C₄-Carbonsäuren mit C₂-C₅-Alkylalkoholen mit 2 bis 4 Hydroxylgruppen,
5) einem Stabilisierungsmittel und wobei der Klebstoff weniger als 0,01 Gew.-% Silciumdioxid enthält.

2. Klebstoff nach Anspruch 1, **dadurch gekennzeichnet, dass** die Gruppe A die CN-Gruppe ist.

3. Klebstoff nach Anspruch 1 oder 2, **dadurch gekennzeichnet, dass** R¹ H ist, R² Me oder Et ist und n 1 ist.

4. Klebstoff nach einem der Ansprüche 1 bis 3, **dadurch gekennzeichnet, dass** er eine Verbindung der allgemeinen Formel (III) umfasst, worin E die CN-Gruppe ist und R³ ausgewählt ist aus der Gruppe, bestehend aus: geradkettigen oder verzweigten C₁-C₁₈-Alkylketten, trimethylsilylierter C₁-C₃-Alkylkette, Cyclohexyl, Cyclohexenyl und Furfuryl.

5. Klebstoff nach einem der Ansprüche 1 bis 4, **dadurch gekennzeichnet, dass** das Thixotropiermittel das Produkt ist, das sich aus der Umsetzung zwischen hydriertem Rizinusöl und einem aliphatischen Diamin, ausgewählt aus 1,2-Ethandiamin, 1,3-Propandiamin und 1,6-Hexandiamin ergibt.

6. Klebstoff nach einem der Ansprüche 1 bis 5, **dadurch gekennzeichnet, dass** der Beschleuniger ausgewählt ist aus der Gruppe, bestehend aus Kronenethern; silylierten Kronenethern; Calixarenen; tetra-*t*-Butylestern; und Dimethylethern von PEG 400, PEG 500, PEG 600 und PEG 1000.

7. Klebstoff nach Anspruch 6, **dadurch gekennzeichnet, dass** der Beschleuniger ausgewählt ist aus der Gruppe, bestehend aus 18-Kron-6-ether und Dibenzo-18-Kron-6-ether.

8. Klebstoff nach einem der Ansprüche 1 bis 7, **dadurch gekennzeichnet, dass** der Weichmacher ausgewählt ist aus der Gruppe, bestehend aus Acetaten von C₂-C₅-Alkylalkoholen mit 2 bis 4 Hdyroxylgruppen.

9. Klebstoff nach einem der Ansprüche 1 bis 8, **dadurch gekennzeichnet, dass** das Stabilisierungsmittel ausgewählt ist aus der Gruppe, bestehend aus radikalischen Stabilisierungsmitteln, sauren Stabilisierungsmitteln und Mischungen davon.

10. Klebstoff nach einem der Ansprüche 1 bis 9, **dadurch gekennzeichnet, dass** er weiterhin einen Verdicker, einen Haftvermittler und/oder einen Füllstoff umfasst.

11. Klebstoff nach Anspruch 10, **dadurch gekennzeichnet, dass** der Verdicker ausgewählt ist aus der Gruppe, bestehend aus Poly(meth)acrylaten, Polyvinylpyrrolidonen, Polyvinylacetaten, teilhydrolisierten Polyvinylacetaten, Vinylacetat-Copolymeren und acylierten Cellulosepolymeren.

12. Klebstoff nach Anspruch 11, **dadurch gekennzeichnet, dass** der Verdicker Methylpolymethacrylat ist.

13. Klebstoff nach Anspruch 1, **dadurch gekennzeichnet, dass** er umfasst:
- zwischen 50 Gew.-% und 90 Gew.-% der Verbindung der allgemeinen Formel (I),
- zwischen 0,25 Gew.-% und 10 Gew.-% eines Thixotropiermittels, ausgewählt aus der Gruppe, bestehend aus hydriertem Rizinusöl, hydriertem Rizinusöl, das durch Umsetzung mit einem Amin modifiziert wurde, und Polyamiden,
- zwischen 0,05 Gew.-% und 0,2 Gew.-% eines Beschleunigers,
- zwischen 4 Gew.-% und 12 Gew.-% eines Verdickers,
- zwischen 8 Gew.-% und 25 Gew.-% eines Weichmachers, ausgewählt aus der Gruppe, bestehend aus Estern von C₂-C₄-Carbonsäuren mit C₂-C₅-Alkylalkoholen mit 2 bis 4 Hydroxylgruppen,
- zwischen 0,03 Gew.-% und 0,7 Gew.-% eines radikalischen Stabilisierungsmittels,
- zwischen 0,0004 Gew.-% und 0,0035 Gew.-%, äquivalent zu 4 bzw. 35 ppm eines sauren Stabilisierungsmittels,
und dadurch, dass er im Wesentlichen frei von Siliciumdioxid ist.

14. Klebstoff nach Anspruch 13, **dadurch gekennzeichnet, dass** die Verbindung der allgemeinen Formel (I) ausgewählt ist aus 2-Ethoxyethylcyanoacrylat, 2-Methoxyethylcyanoacrylat und 2-(1-Methoxy) propylcyanoacrylat; das Thixotropiermittel das Produkt ist, das sich aus der Umsetzung von hydriertem Rizinusöl und einem aliphatischen Diamin, ausgewählt aus einer Gruppe, bestehend aus 1,2-Ethandiamin, 1,3-Propandiamin und 1,6-Hexandiamin ergibt; der Beschleuniger ein Kronenether ist, ausgewählt aus der Gruppe, bestehend aus Dibenzo-18-kron-6-ether und 18-Kron-6-ether; der Verdicker Methylpolymethacrylat ist; der Weichmacher ausgewählt ist aus Glycerintriacetat und Ethylenglycoldiacetat; das radikalische Stabilisierungsmittel ausgewählt ist aus Hydrochinonmonomethylether, 2,2'-Methylen-bis- (6-*tert*-butyl-4-methylphenol) und Mischungen davon; und das saure Stabilisierungsmittel der BF₃.etherat-Komplex ist, gegebenenfalls in Kombination mit Schwefeldioxid.

15. Verwendung des Klebstoffs nach einem der Ansprüche 1 bis 14 als Universalklebstoff zum Verbinden von Substraten, sowohl glatten als auch porösen, in jeder Ausrichtung.

## Revendications

1. Adhésif **caractérisé en ce qu'**il comprend :
1) un composé de formule générale (I) 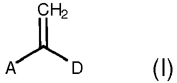 dans lequel
A est choisi dans le groupe consistant en CN, CO₂Me et CO₂Et, et
D est un groupe défini par la formule générale (II) 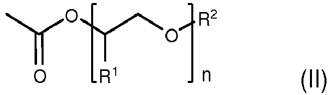
dans lequel
R¹ est choisi dans le groupe consistant en H et Me,
R² est choisi dans le groupe consistant en Si(Me₃)₃, et une chaîne alkyle linéaire ou ramifiée en C₁-C₆, et
n est compris entre 1 et 3,
optionnellement combiné avec un composé de formule générale (III) 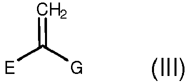 dans lequel
E est choisi dans le groupe consistant en CN, CO₂Me et CO₂Et, et
G est un fragment d'ester carboxylique CO₂R³, dans lequel R³ est choisi dans le groupe consistant en : chaîne alkyle linéaire ou ramifié en C₁-C₁₈, chaîne alkyle triméthylsilyle en C₁-C₃, allyle, propargyle, cyclohexyle, cyclohexényle, méthylcyclohexyle, méthylcyclohexényle, éthylcyclohexyle, éthylcyclohexényle, furfuryle, phényléthyle, phénoxyéthyle, fragment de cyanoacrylate, fragment de méthacrylate et fragment d'acrylate.
2) un agent thixotrope choisi dans le groupe consistant en huile de ricin hydrogénée, huile de ricin hydrogénée modifiée par réaction avec une amine, et polyamides,
3) un agent accélérateur,
4) un agent plastifiant choisi dans le groupe consistant en esters d'acides carboxyliques en C₂-C₄ avec des alcools alkyliques en C₂-C₅ ayant des groupes hydroxyles 2-4,
5) un agent stabilisant, et l'adhésif contient moins de 0,01 % en poids de silice.

2. Adhésif selon la revendication 1, **caractérisé en ce que** le groupe A est le groupe CN.

3. Adhésif selon les revendications 1 ou 2, **caractérisé en ce que** R¹ est H, R² est Me ou Et n est 1.

4. Adhésif selon l'une quelconque des revendications 1 à 3, **caractérisé en ce qu'**il comprend un composé de formule générale (III), dans lequel E est le groupe CN, et R³ est choisi dans le groupe consistant en : chaîne alkyle droite ou ramifiée en C₁-C₁₈, chaîne alkyle triméthylsilyle en C₁-C₃, cyclohexyle, cyclohexényle, et furfuryle.

5. Adhésif selon l'une quelconque des revendications 1 à 4, **caractérisé en ce que** l'agent thixotrope est le produit découlant de la réaction entre l'huile de ricin hydrogénée et une diamine aliphatique, choisie parmi 1,2-éthanediamine, 1,3-propanediamine et 1,6-hexanediamine.

6. Adhésif selon l'une quelconque des revendications 1 à 5, **caractérisé en ce que** l'agent accélérateur est choisi dans le groupe consistant en éthers couronnes ; éthers couronnes silylés ; esters tétra-*t*-butyl de calixarènes ; et éthers méthyliques de PEG 400, PEG 500, PEG 600 et PEG 1000.

7. Adhésif selon la revendication 6, **caractérisé en ce que** l'agent accélérateur est choisi dans le groupe consistant en éther 18-couronne-6 et éther dibenzo-18-couronne-6.

8. Adhésif selon l'une quelconque des revendications 1 à 7, **caractérisé en ce que** l'agent plastifiant est choisi dans le groupe consistant en acétates d'alcools alkyliques en C₂-C₅ ayant des groupes hydroxyles 2-4.

9. Adhésif selon l'une quelconque des revendications 1 à 8, **caractérisé en ce que** l'agent stabilisant est choisi dans le groupe consistant en agents stabilisants radicalaires, agents stabilisants acides, et des mélanges de ces derniers.

10. Adhésif selon l'une quelconque des revendications 1 à 9, **caractérisé en ce qu'**il comprend en outre un épaississant, un promoteur d'adhésion et/ou une charge.

11. Adhésif selon la revendication 10, **caractérisé en ce que** l'épaississant est choisi dans le groupe consistant en poly(méth)acrylates, polyvinylpyrrolidones, acétates de polyvinyle, acétates de polyvinyle partiellement hydrolysés, copolymères d'acétate de vinyle, et polymères de cellulose acylés.

12. Adhésif selon la revendication 11, **caractérisé en ce que** l'épaississant est le polyméthacrylate de méthyle.

13. Adhésif selon la revendication 1, **caractérisé en ce qu'**il comprend :
- entre 50 % et 90 % en poids du composé de formule générale (I),
- entre 0,25 % et 10 % en poids d'un agent thixotrope choisi dans le groupe consistant en huile de ricin hydrogénée, huile de ricin hydrogénée modifiée par réaction avec une amine, et polyamides,
- entre 0,05 % et 0,2 % en poids d'un agent accélérateur,
- entre 4 % et 12 % en poids d'un épaississant,
- entre 8 % et 25 % d'un agent plastifiant choisi dans le groupe consistant en esters d'acides carboxyliques en C₂-C₄ avec des alcools alkyliques en C₂-C₅ ayant groupes hydroxyles 2-4,
- entre 0,03 % et 0,7 % en poids d'un agent stabilisant radicalaire,
- entre 0,0004 % et 0,0035 % en poids, équivalant à 4 et 35 ppm, respectivement, d'un agent stabilisant acide,
et est substantiellement exempt de silice.

14. Adhésif selon la revendication 13, **caractérisé en ce que** le composé de formule générale (I) est choisi parmi le cyanoacrylate de 2-éthoxyéthyle, le cyanoacrylate de 2-méthoxyéthyle et le cyanoacrylate de 2-(1-méthoxy)propyle ; l'agent thixotrope est le produit découlant de la réaction entre l'huile de ricin hydrogénée et une diamine aliphatique, choisie dans le groupe consistant en 1,2-éthanediamine, 1,3-propanediamine et 1,6-hexanediamine ; l'agent accélérateur est un éther couronne choisi dans le groupe consistant en éther dibenzo-18-couronne-6 et éther 18-couronne-6 ; l'épaississant est le polyméthacrylate de méthyle ; l'agent plastifiant est choisi parmi le triacétate de glycérine et le diacétate d'éthylèneglycol ; l'agent stabilisant radicalaire est choisi parmi l'éther monométhylique d'hydroquinorie, 2,2'-méthylène-bis-(6-*tert*-butyl-4-méthylphénol) et des mélanges de ces derniers ; et l'agent stabilisant acide est le complexe d'éthérate BF₃ optionnellement en combinaison avec le dioxyde de soufre.

15. Utilisation de l'adhésif selon l'une quelconque des revendications 1 à 14 comme adhésif universel pour la liaison de substrats, lisses et poreux, dans n'importe quelle orientation.
